(19) **Europäisches Patentamt**
**European Patent Office**
**Office européen des brevets**

(11) **EP 1 501 375 B1**

(12) **EUROPÄISCHE PATENTSCHRIFT**

(45) Veröffentlichungstag und Bekanntmachung des Hinweises auf die Patenterteilung:
**26.12.2007  Patentblatt 2007/52**

(21) Anmeldenummer: **03747422.8**

(22) Anmeldetag: **26.04.2003**

(51) Int Cl.:
***A23L 1/22*** *(2006.01)*

(86) Internationale Anmeldenummer:
**PCT/EP2003/004383**

(87) Internationale Veröffentlichungsnummer:
**WO 2003/092412 (13.11.2003 Gazette 2003/46)**

(54) **AROMAPARTIKEL**

AROMA PARTICLE

PARTICULES AROMATIQUES

(84) Benannte Vertragsstaaten:
**AT BE BG CH CY CZ DE DK EE ES FI FR GB GR HU IE IT LI LU MC NL PT RO SE SI SK TR**

(30) Priorität: **30.04.2002  DE 10219228**

(43) Veröffentlichungstag der Anmeldung:
**02.02.2005  Patentblatt 2005/05**

(73) Patentinhaber: **Symrise GmbH & Co. KG**
**37603 Holzminden (DE)**

(72) Erfinder:
 • **RENZ, Karl-Heinz**
 **37603 Holzminden (DE)**
 • **SCHLEIFENBAUM, Birgit**
 **1299 Crans pres Celigny (CH)**

 • **UHLEMANN, Jens**
 **37603 Holzminden (DE)**
 • **SALEEB, Fouad**
 **Pleasantville, NY 10570 (US)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
 **EP-A- 1 034 705       EP-A- 1 123 660**
 **WO-A-00/25606       WO-A-02/00039**
 **US-A- 3 704 137       US-A- 4 820 534**
 **US-A- 5 009 900       US-A- 5 972 395**
 **US-A1- 2001 036 503**

EP 1 501 375 B1

**Beschreibung**

Die Erfindung betrifft glasartige Aromapartikel, deren Herstellung sowie deren Verwendung in Lebensmittelprodukten, Bedarfsgegenständen und Pharmazeutika.

Unter einem Aroma wird in der vorliegenden Erfindung ein Geruchseindrücke und/oder Geschmackseindrücke bewirkender Stoff verstanden. Es kann sich dabei um Einzelstoffe bzw. Einzelsubstanzen oder um Mischungen handeln. Unter einem Aroma werden auch Riechstoffe, Aromastoffe, Geschmackstoffe, Parfümöle, Düfte, Riechstoffkompositionen, Duftmischungen und dergleichen verstanden.

Unter Aromapartikeln (eingekapseltes Aroma) werden in der vorliegenden Erfindung Einkapselungen verstanden, die das Einkapselungsmaterial (Matrix) und ein Aroma enthalten. Die nachstehend erwähnten Matrices sind glasartig und werden auch als Gläser bezeichnet.

Aromen sind meist sehr komplexe Mischungen, d.h. Kombinationen von vielen chemischen Stoffen mit unterschiedlichen chemischen und physikalischen Eigenschaften. Es gibt einen wachsenden Bedarf für die Einkapselung von solchen Aromen, da der Bedarf für stabile Produkte in unterschiedlichsten Anwendungen wie Lebensmittelprodukten, Bedarfsgegenständen und Pharmazeutika zunimmt.

Es wird generell nach bestmöglichem Schutz in der Matrix bzw. nach maximaler Haltbarkeit gesucht.

Es sollen die Aromaverluste während der Einkapselung minimiert und die Aromaretention während der Lagerung maximiert werden. Für einen kostengünstigen Aromeneinsatz beim Verbraucher sind darüber hinaus eine hohe Beladung und eine hohe Retention der flüchtigen Aromen wichtig. Als Retention wird die Wiederfindung der über Rezeptur eingesetzten Aromastoffe im eingekapselten Produkt bezeichnet.

Ein weiteres Ziel ist eine frei einstellbare Korngröße im Bereich 0,1 bis 5 mm mit enger Größenverteilung. Angestrebt wird ein nahezu sphärisches Produkt oder ein zylindrisches Produkt mit einem Durchmesser zu Länge / Verhältnis nahe 1.

Eingekapselte Aromen mit einer besonders guten Lagerstabilität werden in der Aromenindustrie in der Regel durch Emulgierung des Aromas in geschmolzenen Kohlenhydratmischungen mit anschließender Formgebung bzw. Zerkleinerung hergestellt. Ältere Verfahren (z.B. US-A 4,707,367, US-A 4,499,112) arbeiten batchweise mit Rührkesseln. Als besonders vorteilhaft hat sich in neuerer Zeit eine kontinuierliche Verfahrensweise in Doppelwellen-Extrudern herausgestellt (z.B. US-A 5,603,971, WO 94/06308, US-A 5,009,900).

Bei der Extrusion werden zunächst endlose zylindrische Stränge erhalten, deren Durchmesser durch den Bohrungsdurchmesser der verwendeten Lochplatte festgelegt ist. Durch Zerkleinerung in einem nachgeschalteten mechanischen Zerkleinerungsverfahren (z.B. Schneidmühle oder Brecher) wird der endlose Strang in zylindrische Abschnitte zerteilt. Liegt der Strangdurchmesser über dem gewünschten Enddurchmesser, so muss der Strang zusätzlich in Achsrichtung gebrochen werden.

Auf jeden Fall zerstört der Zerkleinerungsschritt die Oberflächenstruktur der Partikel. Damit ist nachteilig eine erhöhte Beladung mit einer öligen Schicht aus dem eingesetzten Aroma verbunden. Die an der Oberfläche befindliche ölige Schicht aus dem eingesetzten Aroma bewirkt ein Verkleben der Partikel sowie eine starke Verschlechterung der Lagerstabilität der Partikel. Außerdem bildet sich ein unerwünscht hoher Anteil von Feinstaub.

US-A 4,820,534 offenbart eine Methode zur Fixierung labiler Stoffe wie z.B. ätherischer Öle in einem extrudierten Glas, dadurch gekennzeichnet, dass die mengenmäßig wichtigere Komponente mit einem Gewichtsanteil von wenigstens 70 % ein Maltodextrin mit einem DE (Dextrose-Equivalent) bis zu 20 ist. Die resultierende Matrix ist ein hartes, nicht hygroskopisches Glas, aus dem ohne Zugabe von Emulgatoren und Fließhilfsmitteln eingekapselte ätherische Öle oder andere Aromen hergestellt werden können. Um kleine Partikelgrößen zu erhalten, insbesondere Partikel kleiner als 1 mm, müssen zuerst grobe Stränge hergestellt werden, die nachfolgend in einem arbeitsintensiven Prozess zerkleinert und gesiebt werden, wodurch unerwünschte staubige Feinanteile entstehen. Eine direkte Verarbeitung dieses Glases über Lochplatten mit kleinen Öffnungen (kleiner als 1 mm) ist nicht möglich, da es bei den notwendigen Temperaturen zu unerwünschten Aromaverlusten und -reaktionen sowie zu Verkohlungen und Verstopfungen im Extruder kommen würde.

US-A 5,972,395 offenbart die Verwendung eines mengenmäßig untergeordneten Gewichtsanteils des Maltodextrins mit einem Dextrose-Equivalent von bis zu 20 von 15 bis 30 %. Die Einkapselung von wasserunlöslichem, lipophilem Fischöl oder fester labiler Komponenten wie Carotin und Maltol wird beschrieben. Diese Materialien haben einen nur geringfügigen weichmachenden Effekt auf die Matrix. Diese Methode lässt sich jedoch nicht auf die Einkapselung handelsüblicher Aromen anwenden, da praktisch alle natürlichen, naturidentischen oder künstlichen Aromen Komponenten enthalten, die als sehr effektive Weichmacher der Kohlenhydratmatrix gemäß US-A 5,972,395 wirken, wodurch das Glas klebrig und schlecht verarbeitbar wird.

WO 0025606 offenbart auch Aromapartikel.

Sehr harte Gläser erschweren die Verarbeitung auf Grund der hohen Viskosität ihrer Schmelze, so dass eine Durchströmung von kleinen Öffnungen nicht mehr möglich ist. Weiche Matrices lassen sich über Schmelzextrusion und integrierte Zerkleinerung nicht oder nur sehr schlecht verarbeiten, da die Schmelze zu weich ist und die gebildeten Partikel zum Verkleben neigen. Dieses Problem tritt insbesondere bei dem Ausbringen der Schmelze durch kleine Öffnungen auf. Zudem können weiche Gläser unerwünscht große Tropfen des Aromas in der Matrix und damit sogar ein Austreten des Aromas in flüssiger Form zur Folge haben.

Es werden daher Kohlenhydrat-Matrices und Verfahren zu deren Herstellung gesucht, welche stabile Einkapselungen von Aromen mittels Schmelzextrusion und Kopfgranulierung ermöglichen und dabei nicht die beschriebenen Nachteile des Standes der Technik aufweisen. In der vorliegenden Erfindung wird unter Kopfgranulierung eine Zerkleinerung der aus dem Extruder ausgebrachten Schmelze unmittelbar am Extruderausgang verstanden. Die noch weiche Oberflächenstruktur wird durch Einwirkung der Kopfgranulierung versiegelt.

Gegenstand der vorliegenden Erfindung sind glasartige Aromapartikel hergestellt durch Extrusion einer aromatisierten Schmelze mit anschließender Kopfgranulation, dadurch gekennzeichnet, dass die Matrix der Partikel 20 bis 80 Gew.-%, bevorzugt 30 bis 70 Gew.-%, besonders bevorzugt 40 bis 60 Gew.-%, Kohlenhydratpolymere mit einem mittleren Molekulargewicht größer 1000 und Glucose in einer Menge von 0,5 bis 5 Gew.-% enthält, die aromatisierte Schmelze über eine Öffnung aus dem Extruder ausgebracht und im noch nicht erstarrten Zustand zerkleinert wird.

Ein weiterer Gegenstand der vorliegenden Erfindung ist ein Verfahren zur Herstellung der erfindungsgemäßen Aromapartikel, sowie deren Verwendung in Lebensmitteln, Pharmazeutika und Bedarfsgegenständen.

Die verwendeten Kohlenhydratpolymere werden durch saure oder enzymatische Hydrolyse von Stärke hergestellt. Stärke ist ein langkettiges Glucose-Polymer. Die vollständige Säure-Hydrolyse von Stärke führt zu Glucose. Bei der enzymatischen Hydrolyse von Stärke kann auch das Glucose-Dimer Maltose erzeugt werden. Der Zersetzungsgrad der Stärke wird mit der Kennzahl "Dextrose-Equivalent" (DE) gemessen, welche die Grenzwerte 0 für das langkettige Glucosepolymer und 100 für die reine Glucose annehmen kann. Die Wasserlöslichkeit der Stärkeabbauprodukte nimmt mit steigendem DE-Wert zu. Stärkeabbauprodukte mit DE unter 10 sind schlecht wasserlöslich.

Gemäß einer literaturbekannten Faustformel (H. Levine, L. Slade, "Water as a plasticizer: Physico-chemical aspects of low moisture polymeric systems", In Water Science Reviews, 1988, Vol. 3, F. Franks (Hrsg.), S. 79-185, Cambridge University Press, Cambridge, England) ist das mittlere Molekulargewicht der Stärkeabbauprodukte umgekehrt proportional zum DE-Wert:

$$\text{Mittleres Molekulargewicht} = \frac{18016}{DE}$$

Alle nachfolgenden Angaben zum mittleren Molekulargewicht der Stärkeabbauprodukte sind über diese Faustformel ermittelt. Es sei an dieser Stelle darauf hingewiesen, dass andere Verfahren zur Bestimmung der Molekulargewichte (z.B. Gelchromatographie oder Kalorimetrie) evtl. zu stark divergierenden Ergebnissen führen können.

Bei der Zersetzung der Stärke (DE deutlich unter 10, mittleres Molekulargewicht weit über 2000) entstehen nun zunächst Maltodextrine (DE 10 bis 20, mittleres Molekulargewicht 1000 bis 2000), die weiter zu Glucose-Sirupen (DE > 20, mittleres Molekulargewicht unter 1000), bestehend aus monomeren Zuckern, abgebaut werden können.

Maltodextrine bestehen im wesentlichen aus Polymeren mit einem Polymerisationsgrad der Glucose (Degree of Polymerization DP) beginnend bei 4 (Maltotetraose, Molekulargewicht 720) und höher. Sie enthalten nur kleinere Mengen monomere Zucker wie Glucose (DP 1, Molekulargewicht 180,2), Maltose (DP 2, Molekulargewicht 360,4) und Maltotriose (DP 3, Molekulargewicht 540,6).

In einer bevorzugten Ausführungsform können Maltodextrine mit Dextrose-Equivalenten im Bereich von 10 bis 20 verwendet werden. Besonders bevorzugt sind Maltodextrine mit DE 15 bis 19. Es ist dabei unerheblich, welche Pflanze ursprünglich die Stärke zur Herstellung der Stärkehydrolysate geliefert hat. Geeignet und leicht verfügbar sind Mais-basierende Rohstoffe, um ein Produkt frei von genetisch veränderten Bestandteilen sicherzustellen können beispielsweise auch Rohstoffe aus Tapioka, Reis, Weizen, Kartoffeln eingesetzt werden.

Maltodextrine erhöhen die Aromeneinbindung in der Matrix. Die Kohlenhydratpolymere weisen Schmelzpunkte größer 190°C auf, bevorzugt größer 200°C. Die verwendeten Kohlenhydratpolymere weisen Glasübergangstemperaturen von über 70°C, bevorzugt von über 80°C, insbesondere bevorzugt von über 90°C auf.

Der zu den 30 bis 70 Gew.-% Kohlenhydratpolymere komplementäre Anteil von 70 bis 30 Gew.-% umfasst wasserlösliche, niedrigmolekulare Verbindungen mit Molekulargewichten im Bereich 90 bis 950 und einem Schmelzpunkt im Bereich von 80°C bis 180°C.

Geeignete wasserlösliche, niedrigmolekulare Verbindungen sind beispielsweise Mono-, Di- und Trisaccharide, Zuckeralkohole, feste Lebensmittelsäuren oder deren Gemische. Besonders geeignete Mono-, Di- und Trisaccharide sind beispielsweise Arabinose, Xylose, Fructose, Galactose, Glucose, Mannose, Sorbose, Lactose, Maltose, Saccharose, Maltotriose.

Besonders geeignete Zuckeralkohole sind beispielsweise Mannitol, Sorbitol, Xylitol, Arabinol, Arabitol, Adonitol, Alditol, Ducitol, Iditol.

Besonders geeignete Lebensmittelsäuren sind beispielsweise Citronensäure, Adipinsäure, Äpfelsäure, Fumarsäure, Bernsteinsäure, Milchsäure, Benzoesäure.

Existieren Isomere der genannten Verbindungen, so können die reinen Isomere oder beliebige Gemische davon verwendet werden.

Bevorzugt enthält die Matrix der Partikel zusätzlich einen Emulgator. Vorteilhaft ist die zusätzliche Einarbeitung einer geringen Menge von Monoglyceriden (eine spezielle Emulgatorklasse) von 0,5 bis 3 Gew.-% in die Matrix, um den Schmelzefluss durch Öffnungen (z.B. einer Lochdüse) kleiner 1,0 mm zu erleichtern.

Als Emulgatoren geeignet sind auch Deca-Glycerin-Dipalmitat, Hexa-Glycerin-Distearat, Polyglycerinester, Sulfoacetate, Lecithin.

Es wurde außerdem gefunden, dass eine Mindestmenge von Glucose in der Matrix eine Kopfgranulierung ohne die unerwünschte Bildung von Feinanteilen und ohne eine Adhäsion der frisch gebildeten Partikel ermöglicht. Ein Glucose-Anteil von 0,5 bis 5 Gew.-% in der Matrix ist erfindungsgemäß angegeben.

Weiterhin vorteilhaft ist die Verwendung von Maltotriose, die einen Verbesserung der Aromenrückhaltung bewirken kann, wodurch eine höhere Beladung mit Aroma ermöglicht wird. Falls es bei höherer Beladung mit Aroma zu einem höheren Anteil der bei der Zerkleinerung entstehenden unerwünschten öligen Schicht aus dem eingesetzten Aroma kommen sollte, kann eine konvektive Behandlung mit inertem Gas (z.B. Stickstoff, Edelgase, Luft) zur Entfernung dieser öligen Schicht erfolgen.

Die wasserlöslichen, niedrigmolekularen Verbindungen senken den Erweichungspunkt der Matrix: Je höher ihr Anteil in der Mischung, umso einfacher lässt sich die Matrix aufschmelzen. Die Verarbeitungstemperatur wird dadurch gesenkt. Die Produktstränge lassen sich allerdings schwerer schrieiden und das Granulat ist instabiler gegen Feuchtigkeit und Temperatur. Weiterhin erleichtern die niedrigmolekularen Verbindungen das Granulieren an den Lochdüsen. Das Produkt sprödet schneller aus. Setzt man jedoch zuviel niedrigmolekulare Verbindungen ein, verklebt das Produkt schon an der Lochdüse. Auch beim Lagern tritt ein verstärktes Kleben auf.

Die erfindungsgemäßen Aromapartikel haben typischerweise eine Glasübergangstemperatur im Bereich von 30 bis 100°C, bevorzugt im Bereich von 45 bis 75°C, besonders bevorzugt im Bereich von 50 bis 60°C. Die Glasübergangstemperaturen wurden mittels Differential Scanning Calorimetry (DSC, Aufheizrate 20 K / min) ermittelt.

Die Aromapartikel weisen bevorzugt eine zylindrische oder kugelförmige Geometrie und ein enges Korngrößenprofil auf. Sie haben einen Durchmesser von 0,1 bis 5 mm, bevorzugt von 0,2 bis 2,5 mm, insbesondere bevorzugt von 0,3 bis 1,5 mm und eine Länge von 0,1 bis 10 mm, bevorzugt von 0,2 bis 3,0 mm, insbesondere bevorzugt von 0,3 bis 1,5 mm.

Die erfindungsgemäßen Aromapartikel sind sehr lagerstabil. Die erfindungsgemäßen Aromapartikel sind an der Oberfläche praktisch frei von einer öligen Schicht aus dem eingesetzten Aroma. Das Aroma befindet sich praktisch ausschließlich im Inneren der Partikel. Im Bedarfsfalle können den Aromapartikeln Fließhilfsmittel zugegeben werden, um die Klebrigkeit der Matrix noch weiter zu verringern.

Die erfindungsgemäßen Aromapartikel haben einen Aromagehalt von 0,5 bis 25 Gew.-%, bevorzugt von 1 bis 20 Gew.-%, insbesondere bevorzugt von 3 bis 15 Gew.-% bezogen auf das Aromapartikel-Gesamtgewicht.

Beispiele für Riechstoffe, die Bestandteil des Aromas sein können, finden sich z.B. in S. Arctander, Perfume and Flavor Materials, Vol. I und II, Montclair, N. J., 1969, Selbstverlag oder K. Bauer, D. Garbe und H. Surburg, Common Fragrance and Flavor Materials, 3rd. Ed., Wiley-VCH, Weinheim 1997.

Im Einzelnen seien genannt: Extrakte aus natürlichen Rohstoffen wie Etherische Öle, Concretes, Absolues, Resine, Resinoide, Balsame, Tinkturen wie z. B. Ambratinktur; Amyrisöl; Angelicasamenöl; Angelicawurzelöl; Anisöl; Baldrianöl; Basilikumöl; Baummoos-Absolue; Bayöl; Beifußöl; Benzoeresin; Bergamotteöl; Bienenwachs-Absolue; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolue; Castoreum-absolue; Cedernblätteröl; Cedemholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eau de brouts-Absolue; Eichenmoos-Absolue; Elemiöl; Estragonöl; Eucalyptus-citriodoraÖl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl; Helichrysum-Absolue; Helichrysumöl; Ingweröl; Iriswurzel-Absolue; Iriswurzelöl; Jasmin-Absolue; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolue; Labdanumresin; Lavandin-Absolue; Lavandinöl; Lavendel-Absolue; Lavendelöl; Lemongrasöl; Liebstocköl; Limetteöl destilliert; Limetteöl gepresst; Linaloeöl; Litsea-cubeba-Öl; Lorbeerblätteröl; Macisöl; Majoranöl; Mandarinenöl; Massoirindenöl; Mimosa-Absolue; Moschuskömeröl; Moschustinktur; Muskateller-Salbei-Öl; Muskatnussöl; Myrrhen-Absolue; Myrrhenöl; Myrtenöl; Nelkenblätteröl; Nelkenblütenöl; Neroliöl; Olibanum-Absolue; Olibanumöl; Opopanaxöl; Orangenblüten-Absolue; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolue; Rosenholzöl; Rosenöl; Rosmarinöl; Salbeiöl dalmatinisch; Salbeiöl spanisch; Sandelholzöl; Selleriesamenöl; Spiklavendelöl; Sternanisöl; Styraxöl; Tagetesöl; Tannennadelöl; Tea-tree-Öl; Terpentinöl; Thymianöl;

Tolubalsam; Tonka-Absolue; Tuberosen-Absolue; Vanilleextrakt; Veilchenblätter-Absolue; Verbenaöl; Vetiveröl; Wacholderbeeröl; Weinhefenöl; Wermutöl; Wintergrünöl; Ylangöl; Ysopöl; Zibet-Absolue; Zimtblätteröl; Zimtrindenöl; sowie Fraktionen davon, bzw. daraus isolierten Inhaltsstoffen;

Einzel-Riechstoffe aus der Gruppe der Kohlenwasserstoffe, wie z.B. 3-Caren; α-Pinen; β-Pinen; α-Terpinen; γ-Terpinen; p-Cymol; Bisabolen; Camphen; Caryophyllen; Cedren; Farnesen; Limonen; Longifolen; Myrcen; Ocimen; Valencen; (E,Z)-1,3,5-Undecatrien;

der aliphatischen Alkohole wie z.B. Hexanol; Octanol; 3-Octanol; 2,6-Dimethylheptanol; 2-Methylheptanol, 2-Methyloctanol; (E)-2-Hexenol; (E)- und (Z)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (E,Z)-2,6-Nonadienol; 3,7-Dimethyl-7-methoxyoctan-2-ol; 9-Decenol; 10-Undecenol; 4-Methyl-3-decen-5-ol; der aliphatischen Aldehyde und deren 1,4-Dioxacycloalken-2-one wie z. B. Hexanal; Heptanal; Octanal; Nonanal; Decanal; Undecanal; Dodecanal; Tridecanal; 2-Methyloctanal; 2-Methylnonanal; (E)-2-Hexenal; (Z)-4-Heptenal; 2,6-Dimethyl-5-heptenal; 10-Undecenal; (E)-4-Decenal; 2-Dodecenal; 2,6,10-Trimethyl-5,9-undecadienal; Heptanaldiethylacetal; 1,1-Dimethoxy-2,2,5-trimethyl-4-hexen; Citronellyloxyacetaldehyd;

der aliphatischen Ketone und deren Oxime wie z.B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on; der aliphatischen schwefelhaltigen Verbindungen wie z.B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1-Menthen-8-thiol;

der aliphatischen Nitrile wie z.B. 2-Nonensäurenitril; 2-Tridecensäurenitril; 2,12-Tridecadiensäurenitril; 3,7-Dimethyl-2,6-octadiensäurenitril; 3,7-Dimethyl-6-octensäurenitril;

der aliphatischen Carbonsäuren und deren Ester wie z.B. (E)- und (Z)-3-Hexenylformiat; Ethylacetoacetat; Isoamylacetat; Hexylacetat; 3,5,5-Trimethylhexylacetat; 3-Methyl-2-butenylacetat; (E)-2-Hexenylacetat; (E)- und (Z)-3-Hexenylacetat; Octylacetat; 3-Octylacetat; 1-Octen-3-ylacetat; Ethylbutyrat; Butylbutyrat; Isoamylbutyrat; Hexylbutyrat; (E)- und (Z)-3-Hexenylisobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(E,Z)-2,4-decadienoat; Methyl-2-octinat; Methyl-2-noninat; Allyl-2-isoamyloxyacetat; Methyl-3,7-dimethyl-2,6-octadienoat;

der acyclischen Terpenalkohole wie z.B. Citronellol; Geraniol; Nerol; Linalool; Lavadulol; Nerolidol; Farnesol; Tetrahydrolinalool; Tetrahydrogeraniol; 2,6-Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol 2,6-Dimethyl-2,5,7-octatrien-1-ol; sowie deren Formiate, Acetate, Propionate, Isobutyrate, Butyrate, Isovalerianate, Pentanoate, Hexanoate, Crotonate, Tiglinate, 3-Methyl-2-butenoate;

der acyclischen Terpenaldehyde und -ketone wie z.B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;

der cyclischen Terpenalkohole wie z.B. Menthol; Isopulegol; alpha-Terpineol; Terpinenol-4; Menthan-8-ol; Menthan-1-ol; Menthan-7-ol; Borneol; Isobomeol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;

der cyclischen Terpenaldehyde und -ketone wie z.B. Menthon; Isomenthon; 8-Mercaptomenthan-3-on; Carvon; Campher; Fenchon; alpha-Ionon; beta-Ionon; alphan-Methylionon; beta-n-Methylionon; alpha-Isomethylionon; beta-Isomethylionon; alpha-Iron; alpha-Damascon; beta-Damascon; beta-Damascenon; delta-Damascon; gamma-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; alpha-Sinensal; beta-Sinensal; Acetyliertes Cedemholzöl (Methylcedrylketon);

der cyclischen Alkohole wie z.B. 4-tert.-Butylcyclohexanol ; 3,3,5-Trimethylcyclohexanol; 3-Isocamphylcyclohexanol; 2,6,9-Trimethyl-Z2,Z5,E9-cyclododecatrien-1-ol; 2-Isobutyl-4-methyltetrahydro-2H-pyran-4-ol;

der cycloaliphatischen Alkohole wie z.B. alpha,3,3-Trimethylcyclohexylmethanol; 2-Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;

der cyclischen und cycloaliphatischen Ether wie z.B. Cineol; Cedrylmethylether; Cyclododecylmethylether; (Ethoxymethoxy)cyclododecan; alpha-Cedrenepoxid; 3a,6,6,9a-Tetramethyldodecahydronaphtho[2,1-b]furan; 3a-Ethyl-6,6,9a-trimethyldodecahydronaphtho[2,1-b]furan; 1,5,9-Trimethyl-13-oxabicyclo[10.1.0]trideca-4,8-dien; Rosenoxid; 2-(2,4-Dimethyl-3-cyclohexen-1-yl)-5-methyl-5-(1-methylpropyl)-1,3-dioxan;

der cyclischen Ketone wie z.B. 4-tert.-Butylcyclohexanon; 2,2,5-Trimethyl-5-pentylcyclopentanon; 2-Heptylcyclopentanon; 2-Pentylcyclopentanon; 2-Hydroxy-3-methyl-2-cyclopenten-1-on; 3-Methyl-cis-2-penten-1-yl-2-cyclopenten-1-on; 3-Methyl-2-pentyl-2-cyclopenten-1-on; 3-Methyl-4-cyclopentadecenon; 3-Methyl-5-cyclopentadecenon; 3-Methylcyclopentadecanon; 4-(1-Ethoxyvinyl)-3,3,5,5-tetramethylcyclohexanon; 4-tert.-Pentylcyclohexanon; 5-Cyclohexadecen-1-on; 6,7-Dihydro-1,1,2,3,3-pentamethyl-4(5H)-indanon; 5-Cyclohexadecen-1-on; 8-Cyclohexadecen-1-on; 9-Cycloheptadecen-1-on; Cyclopentadecanon;

der cycloaliphatischen Aldehyde wie z.B. 2,4-Dimethyl-3-cyclohexencarbaldehyd; 2-Methyl-4-(2,2,6-trimethyl-cyclohexen-1-yl)-2-butenal; 4-(4-Hydroxy-4-methylpentyl)-3-cyclohexencarbaldehyd; 4-(4-Methyl-3-penten-1-yl)-3-cyclohexencarbaldehyd;

der cycloaliphatischen Ketone wie z. B. 1-(3,3-Dimethylcyclohexyl)-4-penten-1-on; 1-(5,5-Dimethyl-1-cyclohexen-1-yl)-4-penten-1-on; 2,3,8,8-Tetramethyl-1,2,3,4,5,6,7,8-octahydro-2-naphtalenylmethylketon; Methyl-2,6,10-trimethyl-2,5,9-cyclododecatrienylketon; tert.-Butyl-(2,4-dimethyl-3-cyclohexen-1-yl)keton;

der Ester cyclischer Alkohole wie z.B. 2-tert-Butylcyclohexylacetat; 4-tert Butylcyclohexylacetat; 2-tert-Pentylcyclohexylacetat; 4-tert-Pentylcyclohexylacetat; Decahydro-2-naphthylacetat; 3-Pentyltetrahydro-2H-pyran-4-ylacetat; Decahydro-2,5,5,8a-tetramethyl-2-naphthylacetat; 4,7-Methano-3a,4,5,6,7,7a-hexahydro-5, bzw. 6-indenylacetat; 4,7-Methano-3a,4,5,6,7,7a-hexahydro-5, bzw. 6-indenylpropionat; 4,7-Methano-3a,4,5,6,7,7a-hexahydro-5, bzw. 6-indenylisobutyrat; 4,7-Methanooctahydro-5, bzw. 6-indenylacetat;

der Ester cycloaliphatischer Carbonsäuren wie z. B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;

der aromatischen Kohlenwasserstoffe wie z. B. Styrol und Diphenylmethan;

der araliphatischen Alkohole wie z.B. Benzylalkohol; 1-Phenylethylalkohol; 2-Phenylethylalkohol; 3-Phenylpropanol; 2-Phenylpropanol; 2-Phenoxyethanol; 2,2-Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;

der Ester von araliphatischen Alkoholen und aliphatischen Carbonsäuren wie z.B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; alpha-Trichlormethylbenzylacetat; alpha,alpha-Dimethylphenylethylacetat; alpha,alpha-Dimethylphenylethylbutyrat; Cinnamylacetat; 2-Phenoxyethylisobutyrat; 4-Methoxybenzylacetat; der araliphatischen Ether wie z.B. 2-Phenylethylmethylether; 2-Phenylethylisoamylether; 2-Phenylethyl-1-ethoxyethylether; Phenylacetaldehyddimethylacetal; Phenylacetaldehyddiethylacetal; Hydratropaaldehyddimethylacetal; Phenylacetaldehydglycerinacetal; 2,4,6-Trimethyl-4-phenyl-1,3-dioxane; 4,4a,5,9b-Tetrahydroindeno[1,2-d]-m-dioxin; 4,4a,5,9b-Tetrahydro-2,4-dimethylindeno[1,2-d]-m-dioxin;

der aromatischen und araliphatischen Aldehyde wie z.B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)propanal; 2-Methyl-3-(4-tert.-butylphenyl)propanal; 3-(4-tert.-Butylphenyl)propanal; Zimtaldehyd; alpha-Butylzimtaldehyd; alpha-Amylzimtaldehyd; alpha-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4-Methylendioxybenzaldehyd; 3,4-Dirnethoxybenzaldehyd; 2-Methyl-3-(4-methoxyphenyl)-propanal; 2-Methyl-3-(4-methylendioxyphenyl)propanal;

der aromatischen und araliphatischen Ketone wie z.B. Acetophenon; 4-Methylacetophenon; 4-Methoxyacetophenon; 4-tert.-Butyl-2,6-dimethylacetophenon; 4-Phenyl-2-butanon; 4-(4-Hydroxyphenyl)-2-butanon; 1-(2-Naphthalenyl)ethanon; Benzophenon; 1,1,2,3,3,6-Hexamethyl-5-indanylmethylketon; 6-tert.-Butyl-1,1-dimethyl-4-indanylmethylketon; 1-[2,3-dihydro-1,1,2,6-tetramethyl-3-(1-methylethyl)-1H-5-indenyl]ethanon; 5',6',7',8'-Tetrahydro-3',5',5',6',8',8'-hexamethyl-2-acetonaphthon;

der aromatischen und araliphatischen Carbonsäuren und deren Ester wie z.B. Benzoesäure; Phenylessigsäure; Methylbenzoat; Ethylbenzoat; Hexylbenzoat; Benzyl-benzoat; Methylphenylacetat; Ethylphenylacetat; Geranylphenylacetat; Phenylethyl-phenylacetat; Methylcinnmat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; Cis-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;

der stickstoffhaltigen aromatischen Verbindungen wie z.B. 2,4,6-Trinitro-1,3-dimethyl-5-tert.-butylbenzol; 3,5-Dinitro-2,6-dimethyl-4-tert.-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-tert.-butylphenyl)propanal oder 2,4-Dimethyl-3-cyclohexencarbaldehyd; 6-Isopropylchinolin; 6-Isobutylchinolin; 6-sec.-Butylchinolin; Indol; Skatol; 2-Methoxy-3-isopropylpyrazin; 2-Isobutyl-3-methoxypyrazin;

der Phenole, Phenylether und Phenylester wie z.B. Estragol; Anethol; Eugenol; Eugenylmethylether; Isoeugenol; Isoeugenylmethylether; Thymol; Carvacrol; Diphenylether; beta-Naphthylmethylether; beta-Naphthylethylether; beta-Naphthylisobutylether; 1,4-Dimethoxybenzol; Eugenylacetat; 2-Methoxy-4-methylphenol; 2-Ethoxy-5-(1-propenyl)phenol; p-Kresylphenylacetat;

der heterocyclischen Verbindungen wie z.B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2-Ethyl-3-hydroxy-4H-pyran-4-on;

der Lactone wie z.B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Peritadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

Beispiele für Geschmackstoffe, die Bestandteil des Aromas sein können, sind neben allen o.g. Stoffen vor allem folgende Stoffklassen: Aliphatische Ester (gesättigt und ungesättigt) z.B. Ethylbutyrat, Allylcapronat; aromatische Ester z.B. Benzylacetat, Methylsalicylat; organische aliphatische Säuren (gesättigt und ungesättigt) z.B. Buttersäure, Essigsäure, Capronsäure; organische aromatische Säuren; aliphatische Alkohole (gesättigt und ungesättigt) z.B. Ethanol, Propylenglykol, Octenol; cyclische Alkohole z.B. Menthol; aromatische Alkohole z.B. Benzylalkohol; aliphatische Aldehyde (gesättigt und ungesättigt) z.B. Acetaldehyd, Nonadienal; aromatische Aldehyde z.B. Benzaldehyd; Ketone z.B. Menthon; cyclische Ether z.B. 4-Hydroxy-5-methylfuranon; aromatische Ether z.B. p-Methoxybenzaldehyd, Guajacol; Phenolether z.B. Methoxyvinylphenol; Acetale z.B. Acetaldehyddiethylacetal; Lactone z.B. gamma-Decalacton; Terpene z.B. Limonen, Linalool, Terpinen, Terpineol, Citral (Geranial und Neral); Sulfide z.B. Dimethylsulfid; Thiole z.B. Methylfuranthiol; Disulfide z.B. Difurfuryldisulfid; Pyrazine z.B. Methylpyrazin, Acetylpyrazin.

Die Aromapartikel können ernährungsphysiologisch wirksame Stoffe oder Stoffgemische enthalten (Nutraceuticals). Es seien beispielsweise genannt Panthenol, Pantothensäure, essentielle Fettsäuren, Vitamin A und Derivate, Carotine, Vitamin C (Ascorbinsäure), Vitamin E (Tocopherol) und Derivate, Vitamine der B- und D-Reihe wie Vitamin $B_6$ (Nicotinamid), Vitamin $B_{12}$, Vitamin $D_1$, Vitamin $D_3$, Vitamin F, Folsäure, Biotin, Aminosäuren, Verbindungen der Elemente Magnesium, Silicium, Phosphor, Calcium, Mangan, Eisen oder Kupfer, Coenzym Q10, ungesättigte Fettsäuren, ω-3-Fettsäuren, mehrfach ungesättigte Fettsäuren, γ-Linolensäure, Ölsäure, Eicosapentaensäure, Docosahexaënsäure und deren Derivate, Bisabolol, Chloramphenicol, Coffein, Capsaicin, Prostaglandine, Thymol, Campher, Extrakte oder andere Produkte pflanzlicher und tierischer Herkunft, z.B. Nachtkerzenöl, Borretschöl oder Johannisbeerkernöl, Fischöle, Lebertran, Ceramide und Ceramidähnliche Verbindungen. Pflanzenextrakte wie z. B. Arnika, Aloe, Bartflechte, Efeu, Brennnessel, Ginseng, Henna, Kamille, Ringelblume, Rosmarin, Salbei, Schachtelhalm oder Thymian. Öle wie Aprikosenkernöl, Avocadoöl, Babassuöl, Baumwollsamenöl, Borretschöl, Distelöl, Erdnussöl, Gamma-Oryzanol, Hagebuttenkernöl, Hanföl, Haselnussöl, Johannisbeersamenöl, Jojobaöl, Kirschkernöl, Lachsöl, Leinöl, Maiskeimöl, Makadamianussöl, Mandelöl, Nachtkerzenöl, Nerzöl, Olivenöl, Pekannussöl, Pfirsichkemöl, Pistazienkernöl, Rapsöl, Reiskeimöl, Rizinusöl, Safloröl, Sesamöl, Sojaöl, Sonnenblumennöl, Teebaumöl, Traubenkernöl oder Weizenkeimöl.

Es ist selbstverständlich möglich, dass die erfindungsgemäßen Aromapartikel noch weitere Stoffe, wie z.B. Emulgatoren, Farbstoffe, Antioxidantien, Stabilisatoren, UV-Filter, Vitamine und andere in der Lebensmittel-, Kosmetik- oder Riechstoffindustrie üblichen Inhaltsstoffe enthalten können.

Geeignete Antioxidantien sind beispielsweise Aminosäuren (z.B. Glycin, Histidin, Tyrosin, Tryptophan) und deren Derivate, Imidazole (z.B. Urocaninsäure) und deren Derivate, Peptide wie D,L-Carnosin, D-Camosin, L-Carnosin und deren Derivate (z.B. Anserin), Carotinoide, Carotine (z.B. α-Carotin, β-Carotin, Lycopin) und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl-, Glyceryl-, und Oligoglycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Buthioninsulfone, Penta-, Hexa-, Heptathioninsulfoximin) in sehr geringen verträglichen Dosierungen (z.B. pmol bis μmol/kg), ferner (Metall)-Chelatoren (z.B. α-Hydroxyfettsäuren, Palmitinsäure, Phytinsäure, Lactoferrin), α-Hydroxysäuren (z.B. Zitronensäure, Milchsäure, Apfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg - Ascorbylphosphat, Ascorbylacetat), Tocopherole und Derivate (z.B. Vitamin E - acetat), Vitamin A und Derivate (Vitamin A - palmitat) sowie Konferylbenzoat des Benzoeharzes, Rutinsäure und deren Derivate, Ferulasäure und deren Derivate, Butylhydroxytoluol, Butylhydroxyanisol, Nordihydroguajakharzsäure, Nordihydroguajaretsäure, Trihydroxybutyrophenon, Harnsäure und deren Derivate, Mannose und deren Derivate, Zink und dessen Derivate (z.B. ZnO, $ZnSO_4$) Selen und dessen Derivate (z.B. Selenmethionin), Stilbene und deren Derivate (z.B. Stilbenoxid, Trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

Geeignete Lichtschutzmittel sind z.B. organische UV-Absorber aus der Klasse der 4-Aminobenzoesäure und Derivate, Salicylsäure-Derivate, Benzophenon-Derivate, Dibenzoylmethan-Derivate, Diphenylacrylate, 3-Imidazol-4-yl-acrylsäure und deren Ester, Benzofuran-Derivate, Benzylidenmalonat-Derivate, polymere UV-Absorber, enthaltend einen oder mehrere silizium-organische Reste, Zimtsäure-Derivate, Campher-Derivate, Trianilino-s-Triazin-Derivate, 2-Hydroxyphenylbenzotriazol-Derivate, 2-Phenylbenzimidazol-5-sulfonsäure und deren Salze, Anthranilsäurementhylester, Benzotriazolderivate.

Als geeignete Kühlsubstanzen seine beispielsweise genannt 1-Menthol, Menthonglycerinacetal, Menthyllactat, substituierte Menthyl-3-carbonsäureamide (z.B. Menthyl-3-carbonsäure-N-ethylamid), 2-Isopropyl-N,2,3-trimethylbutanamid, substituierte Cyclohexancarbonsäureamide, 3-Menthoxypropan-1,2-diol, 2-Hydroxyethylmenthylcarbonat, 2-Hydroxypropylmenthylcarbonat, N-Acetylglycinmenthylester, Menthylhydroxycarbonsäureester (z.B. Menthyl-3-hydroxybutyrat), Monomenthylsuccinat 2-Mercaptocyclodecanon, Menthyl-2-pyrrolidin-5-oncarboxylat.

Die nach dem erfindungsgemäßen Verfahren erhältlichen Schmelzen sind noch derart fließfähig, dass die Schmelze durch kleine Öffnungen bei vertretbaren Temperaturen und nicht zu hohem Extrusionsdruck ausgebracht werden kann, ohne zu unerwünschten Aromaverlusten zu führen. Die aus dem Extruder ausgebrachte Schmelze ermöglicht eine effektive Kopfgranulierung nahezu ohne Schnittverluste. Unter Schnittverlusten werden solche Aromapartikel verstanden, die nicht in der gewünschten Korngrößenfraktion liegen.

Der bevorzugte Extrudertyp ist ein Doppelwellenextruder.

Die Öffnungen am Extruderausgang, durch die die Schmelze ausgetragen wird, können jede Form und Größe aufweisen. Bevorzugt sind runde Öffnungen mit einem Durchmesser von 0,1 bis 5 mm, bevorzugt von 0,2 bis 2,5 mm, insbesondere bevorzugt von 0,3 bis 1,5 mm. Üblicherweise werden Lochplatten verwendet.

Die erhaltenen Aromapartikel weisen ein Schüttgewicht von 0,5 bis 1,5 kg/l, bevorzugt von 0,7 bis 0,9 kg/l auf.

In der vorliegenden Erfindung wird eine Kopfgranulierung der aus dem Extruder ausgebrachten Schmelze im fließfähigen, noch nicht erstarrten Zustand in unmittelbarer räumlicher Nähe des Extruderausgangs durchgeführt. Hierzu ist es unerheblich, auf welche Art und Weise die Zerkleinerung vorgenommen wird. So kann die Zerkleinerung durch Messer, Drähte oder sonstiges Schneidewerkzeug erfolgen. Die Bewegungsrichtung der Schneidewerkzeuge kann vertikal, horizontal oder in beide Richtungen sowie rotierend ausgeführt sein.

Die Kopfgranulierung der erfindungsgemäßen Schmelze ermöglicht die Herstellung eines homogenen Produktes mit enger, kontrollierter Korngrößenverteilung und eliminiert gleichzeitig den Anfall der unerwünschten staubigen Feinanteile weitgehend, bis auf unter 2 Gew.-%.

Beispielsweise kann das erfindungsgemäße Verfahren in den folgenden Stufen durchgeführt werden:

a. Matrix aufschmelzen

Eine geeignete trockene Matrix enthaltend 30 bis 70 Gew.-% Kohlenhydratpolymere wird hergestellt und durch Erhitzen auf 80 bis 120 °C, bevorzugt auf 90 bis 100°C, in einem Extruder aufgeschmolzen. Vorzugsweise wird dazu ein Doppelwellen-Extruder mit mehreren Temperaturzonen verwendet, z.B. mit den Einstellungen Temperatur 1. Zone 75°C, Temperatur 2. Zone 90°C, Temperatur 3. Zone 40°C, Temperatur Düse, 100 bis 120°C je nach Druck und Durchsatz.

b. Aroma in die Trockenmischung emulgieren

Das Aroma, das zusätzlich einen geeigneten Emulgator sowie andere Inhaltsstoffe enthalten kann, wird mit einer Dosierung von vorzugsweise 1 bis 25, bevorzugt 3 bis 10, Gew.-% bezogen auf die Trockenmischung über eine Pumpe kontinuierlich in den vorderen Extruderbereich gegeben. Die Extruderwerkzeuge sorgen für die Emulgierung des Aromas und der gegebenenfalls vorhandenen weiteren Inhaltsstoffe in der Schmelze.

Durch das Beheizen der Gehäuse und die Friktionswärme der Schnecken-Drehungen wird die Schmelzung der Trockenstoffe gesteuert. Durch eine geeignete Schneckenkonfiguration wird der Füllgrad und die Verweilzeit der Mischungen im Extruder kontrolliert. Mit Hilfe der Schneckendrehzahl kann der Füllgrad, die Verweilzeit, die Mischeffizienz, die erzeugte Friktionswärme und der Materialdruck beeinflusst werden.

c. Ausbringung aus dem Extruder

Zur Ausformung der Stränge nach der Öffnung muss die Schmelze gekühlt werden. Bevorzugt wird dies durch konzentrisches Anblasen der Lochplatte mit Kaltluft realisiert. Dabei muss auf die gleichmäßige Temperierung der Öffnung geachtet werden.

Es muss ein Mindestdruck von 20 bar vor der Düse hergestellt werden, damit ein gleichmäßiger Austrag ohne Pulsieren möglich ist. Der ideale Druckbereich befindet sich zwischen 35 bis 55 bar. Das flüssige Aroma darf erst im abgekühlten Bereich des Extruders zugegeben werden, da es sonst zum Rückstau oder zum Sieden der Leichtflüchter kommen kann.

Die Produkttemperatur vor der Düse sollte erfahrungsgemäß zwischen 94 und 105°C liegen. Ist die Temperatur zu niedrig, steigt die Viskosität der Schmelze und der Materialdruck an, wodurch nur eine geringe Leistung gefahren werden kann. Ist die Temperatur zu hoch, werden die austretenden Stränge zu weich und klebrig, wodurch ein Granulieren unmöglich wird.

Die Düsen müssen konisch gestaltet sein und eine möglichst glatte Oberfläche innerhalb der Kanäle aufweisen. Eine beschichtete Außenhaut erhöht die Lebensdauer der Düsenplatten.

d. Bildung der Aromapartikel

Die Zerkleinerung der Stränge erfolgt noch in der Erstarrungsphase durch eine Kopfgranulierung. Dazu wird bevorzugt eine gasdichte Ausführung der Kopfgranulierung mit rotierenden Schneidemessern verwendet, die unmittelbar am Ausgang des Extruders erfolgt. Eine stufenlose Drehzahlregelung der Kopfgranulierung ermöglicht die Einstellung der Partikellänge in Abhängigkeit vom Feststoff-Durchsatz. Für einen glatten Schnitt sollte der Messerschaft des Granulators flexibel und auf Federn gelagert sein. Die Messerklingen müssen auf der Düsenplatte glattflächig aufliegen. Die Drehzahl der Messer sollte zwischen 2500 und 3000 U/Min. liegen. Durch die hohen Schneidegeschwindigkeiten wird eine Kühlwirkung über die Rotation erzeugt, die für einen dauerhaft guten Schnitt benötigt wird. Die Messerklingen selbst können eine Metallstärke von 0,5 bis 1,0 mm aufweisen.

Die Freisetzung der Aromen aus den Aromapartikeln kann üblicherweise durch Feuchtigkeit, Wasser, Temperatur oder Kombinationen davon erfolgen.

Die erfindungsgemäßen Aromapartikel können beispielsweise zur Aromatisierung von Lebensmittelprodukten oder Mundhygieneprodukten wie Instantgetränkepulvern, Tees, Suppen- oder Soßenpulvern, Süßwaren, Kaugummis, Zahnpasten, Mundgels, Kautabletten oder Kaubonbons verwendet werden.

Die erfindungsgemäßen Aromapartikel können beispielsweise zur Aromatisierung von Pharmazeutika und pharmazeutischen Formulierungen, wie Lutschbonbons, Lutschtabletten, Kaubonbons, Kautabletten, Tabletten zum Auflösen in Wasser oder Aufgussformulierungen verwendet werden.

Die erfindungsgemäßen Aromapartikel können beispielsweise zur Aromatisierung von Bedarfsgegenständen wie Kosmetika, Seifen, Detergentien, Waschmittel, Raumbeduftem, Hygiene- oder Haushaltsprodukten verwendet werden.

## Beispiele:

## Herstellungsbeispiele:

**Beispiel 1** Herstellung von Zitronenaromapartikeln

Eine geeignete Kohlenhydratmischung wird in einem Doppelwellen-Extruder der Fa. Togum vom Typ TO-EX 45 mit neun Gehäuseblöcken und mehreren getrennt temperierbaren Zonen mit folgenden Betriebsbedingungen aufgeschmolzen:

- Heiztemperatur 1. Zone         75°C
- Heiztemperatur 2. Zone         90°C
- Heiztemperatur 3. Zone         40°C
- Heiztemperatur Düse 100 bis 120°C je nach Druck und Durchsatz
- Produkttemperatur Eintritt 1. Zone Raumtemperatur
- Produkttemperatur Eintritt 2. Zone         60°C
- Produkttemperatur Eintritt 3. Zone         120°C
- Produkttemperatur Eintritt Düse         110°C
- Produkttemperatur Eintritt 1. Zone         z.B. 96°C (90bis 110°C)
- Drehzahl         100 U/min
- Durchsatz Trockenstoff         30 kg/h
- Durchsatz Citronen-Aroma         1,8 kg/h

Die Kohlenhydratmischung (nicht erfindungsgemäß) besteht aus den Rohstoffen Glucidex IT 47 W ex Weizen (Fa. Roquette; Monosaccharide 0,7 %, Disaccharide 56,3 %, Trisaccharide 18,7 %, Tetrasaccharide 1,8%, Oligosaccharide ab den Pentassachariden mit einem Molekulargewicht über 1000 22,5 %) sowie Maltodextrin DE 15-19 ex Weizen (Fa. Cerestar, Monosaccharide 0,4 %, Disaccharide 5,0 %, Trisaccharide 9,5 %, Tetrasaccharide 5,0%, Peritasacharide 4,8%, Hexasaccharide 11,4%, Oligosaccharide ab den Heptasacchariden 63,9 %).

Eine geeignete Formulierung enthält 8340 g Glucidex IT 47 W ex Weizen, 3600 g Maltodextrin DE 15-19 ex Weizen und 60 g Monomuls (Fa. Grünau-Illertissen, molekulardestilliertes Monoglycerid auf Palmölbasis, E471). Sie enthält rechnerisch 33,50 % Oligosaccharide größer DP 6. Das Aroma, das mit 3% Emulgator Tween 80 (Fa. ICI, Polyoxyethylen-(20)-sorbitanmonooleat bzw. Polysorbat 80) versetzt ist, wird mit einer Dosierung von beispielsweise 6% bezogen auf die Trockenmischung über eine Vorlage per elektromechanische Kolbendosierpumpe mit einem Druck von etwa 30 bis 35 bar kontinuierlich in den vorderen Extruderbereich gegeben. Die Extruderwerkzeuge sorgen für die Emulgierung des Aromas in der Schmelze.

Die Lochplatte wird konzentrisch mit Kaltluft angeblasen. Dabei muss auf die gleichmäßige Temperierung geachtet werden, damit kein punktuelles Abkühlen auftritt. Die Kopfgranulierung ist gasdicht ausgeführt, um eine Aromakontamination der Umgebung zu vermeiden. Für die Herstellung von Aromapartikeln mit Nennkorngröße 1 mm werden 3 Messer aus 0,5 mm Stahlblech und eine Granulierplatte mit 600 Bohrungen mit Nenndurchmesser 0 1,0 und 1000 * 0 0,6 Bohrungen auf konzentrischen Kreisen eingesetzt. Die Drehzahlregelung der Kopfgranulierung zur Einstellung der Granulatlänge erfolgt stufenlos in Abhängigkeit vom Feststoff-Durchsatz. Die dabei erhaltenen Granulate weisen ein Schüttgewicht von ca. 0,8 bis 0,9 kg/l auf. Anschließend werden Anteile von Staub bzw. Überkorn über ein doppelstöckiges Sieb mit den Siebgrößen 0,8 mm und 1,25 mm entfernt. Die Siebverluste betragen weniger als 5 % der Ausbeute.

**Beispiel 2** Herstellung von Passionsfruchtaromapartikeln

Eine weitere geeignete Formulierung mit 4740 g Glucidex Mais, 3600 g Maltodextrin Mais, 1400 g Sprühglucose ex Mais, 200 g Gummi Arabicum und 60 g Monomuls enthält rechnerisch 39,70 % Oligosaccharide größer DP 6. Die Sprühglucose ex Mais von Fa. Cerestar hat die Bezeichnung C * Dry GL 01934 und besteht aus 11,5 % Monosacchariden, 40,1 % Disacchariden, 21,0 % Trisacchariden, 8,7% Tetrasacchariden, 3,2 % Pentasacchariden, 1,0 % Hexasaccharide sowie 24,5 % Oligosacchariden ab den Heptasacchariden. 6 % Aroma mit 2 % Emulgator Tween 80 werden in den vorderen Extruderbereich gegeben. Die Betriebsbedingungen des Doppelwellen-Extruders TO-EX 45 lauten:

- Heiztemperatur 1. Zone          75°C
- Heiztemperatur 2. Zone          90°C
- Heiztemperatur 3. Zone          40°C
- Heiztemperatur Düse 100 bis 120°C je nach Druck und Durchsatz
- Produkttemperatur Eintritt 1. Zone Raumtemperatur
- Produkttemperatur Eintritt 2. Zone          60°C
- Produkttemperatur Eintritt 3. Zone          120°C
- Produkttemperatur Eintritt Düse          110°C
- Produkttemperatur Eintritt 1. Zone          z.B. 96°C (90bis 110°C)
- Drehzahl          100 Umin
- Durchsatz Trockenstoff          30 kg/h
- Durchsatz Passionsfrucht-Aroma          1,8 kg/h

Für die Herstellung von Aromapartikeln mit Nennkorngröße 0,6 mm werden 3 Messer aus 0,5 mm Stahlblech und eine Granulierplatte mit 1000 Bohrungen mit Nenndurchmesser Ø 0,6 Bohrungen auf konzentrischen Kreisen eingesetzt. Die dabei erhaltenen Granulate weisen ein Schüttgewicht von ca. 0,8 bis 0,9 kg/l auf. Anschließend werden Anteile von Staub bzw. Überkorn über ein doppelstöckiges Sieb mit den Siebgrößen 0,5 mm und 1,0 mm entfernt. Die Siebverluste betragen weniger als 5 % der Ausbeute.

Die obigen beiden Herstellbeispiele zeigen exemplarisch Ausführungsformen der Erfindung. Das Maltodextrin DE 15-19 ist als Kohlenhydratpolymere mit einem mittleren Molekulargewicht größer 1000 anzusehen, während die beiden Glukosesirupe im Mittel deutlich unter einem Molekulargewicht von 1000 liegen. Die Vorgehensweise kann auf beliebige andere Geschmacksrichtungen, aber auch auf Duftöle übertragen werden. Weiterhin ist es möglich, größere Krongrößen bis zu mehreren Millimetern sowie kleinere Korngrößen bis 0,3 mm mit der gleichen Vorgehensweise herzustellen.

**Anwendungsbeispiele**

**Beispiel 3** Beuteltee

Aromatisierung von schwarzem Tee in Teebeuteln mit 3 Gew.-% Zitronenaromapartikeln (Ø 1 mm, Länge 1 bis 2 mm). Während der Lagerung des Tees bleibt das Aroma in der Granulatmatrix eingeschlossen, und wird erst beim Aufbrühen durch Lösen der Partikelmatrix in heißem Wasser freigesetzt.

**Beispiel 4** Instantgetränkepulver

Aromatisierung einer Instantgetränke - Pulvermischung bestehend aus 90 Gew.-% Saccharose, 8 Gew.-% Zitronensäure, 1 Gew.-% weiteren Zutaten (CalciumPhosphat, Ascorbinsäure, modifizierter Cellulose, Farbstoff) und 1 Gew.-% gelb gefärbten Passionsfruchtaromapartikeln (Ø 0,6 mm), die nach der beschriebenen Verfahrensweise hergestellt wurden. Die Mischung zeichnet sich durch eine besonders gute Lagerstabilität des Aromas auch bei geringer Korngröße aus. Aufgrund des geringen Anteils des oxidationsempfindlichen Passionsfruchtaromas an der Oberfläche der Partikel ist die Entstehung von Fehlnoten (bedingt durch Oxidation) sehr stark minimiert.

**Beispiel 5** Kaugummi

Kaugummimasse wird mit blau gefärbten Pfefferminzaromapartikeln (Ø 0,6 mm, Länge 0,4 mm), die nach dem beschriebenen Verfahren hergestellt wurden, versetzt. Die Partikel erzeugen einen besonderen optischen Effekt. Die Freisetzung des Aromas erfolgt mechanisch beim Kauen.

**Beispiel 6** Temperaturgesteuerte Duftfreisetzung

Ein Heiz- und Kühlplatte wird mit ungefärbten Parfümölpartikeln (Ø 0,6 mm, Länge 0,4 mm), die nach dem beschriebenen Verfahren hergestellt wurden, versetzt. Die Parfümöl-Freisetzung wird durch Aufheizen bewirkt. Die Freisetzung des Parfümöl kann mehrmalig durch einen Aufheiz- und Abkühlzyklus gestartet und gestoppt werden, bis das Parfümöl vollständig aufgebraucht ist.

**Beispiel 7** Seife

Eine Seife wird mit ungefärbten Parfümölpänikeln (Ø 0,6 mm, Länge 0,4 mm), die nach dem beschriebenen Verfahren hergestellt wurden, versetzt. Die Parfümöl-Freisetzung wird durch Auflösen bewirkt. Die Freisetzung des Parfümöl kann mehrmalig durch ein Anlösen und Austrocknen gestartet und gestoppt werden, bis die Seife vollständig aufgebraucht ist.

**Patentansprüche**

1. Aromapartikel, hergestellt durch Extrusion einer aromatisierten Schmelze mit anschließender Kopfgranulation, **dadurch gekennzeichnet, dass** die Matrix der Partikel 20 bis 80 Gew.-% Kohlenhydratpolymere mit einem mittleren Molekulargewicht größer 1000 und Glucose in einer Menge von 0,5 bis 5 Gew.% enthält.

2. Aromapartikel nach Anspruch 1, **dadurch gekennzeichnet, dass** die Matrix der Partikel 30 bis 70 Gew.-% Kohlenhydratpolymere mit einem mittleren Molekulargewicht größer 1000 enthält.

3. Aromapartikel nach Anspruch 1, **dadurch gekennzeichnet, dass** die Matrix der Partikel 40 bis 60 Gew.% Kohlenhydratpolymere mit einem mittleren Molekulargewicht größer 1000 enthält.

4. Aromapartikel nach einem der Ansprüche 1 bis 3, **dadurch gekennzeichnet, dass** die Matrix der Partikel einen Emulgator enthält.

5. Aromapartikel nach Anspruch 4, **dadurch gekennzeichnet, dass** die Matrix Monoglyceride in einer Menge von 0,5 bis 3 Gew.-% enthält.

6. Aromapartikel nach einem der Ansprüche 1 bis 5, **dadurch gekennzeichnet, dass** sie eine Glasübergangstemperatur im Bereich von 30 bis 100°C haben.

7. Verfahren zur Herstellung der Aromapartikel nach Anspruch 1, **gekennzeichnet durch** die Schritte Extrusion einer aromatisierten Schmelze mit anschließender Kopfgranulation, Ausbringung der Schmelze über eine Öffnung aus dem Extruder und Zerkleinerung der Schmelze im noch nicht erstarrten Zustand.

8. Verwendung der Atomapartikel nach Anspruch 1 in Lebensmitteln, Pharmazeutika und Bedarfsgegenständen wie Kosmetika, Waschmittel oder Haushaltsprodukte.

**Claims**

1. Aroma particles prepared by extrusion of an aromatised melt followed by die-face pelletisation, **characterised in that** the matrix of the particles contains 20 to 80 wt.% carbohydrate polymers having a mean molecular weight greater than 1000 and glucose in an amount of 0.5 to 5 wt.%.

2. Aroma particles according to Claim 1, **characterised in that** the matrix of the particles contains 30 to 70 wt.% carbohydrate polymers with a mean molecular weight greater than 1000.

3. Aroma particles according to Claim I, **characterised in that** the matrix of the particles contains 40 to 60 wt.% carbohydrate polymers with a mean molecular weight greater than 1000.

4. Aroma particles according to one of Claims 1 to 3, **characterised in that** the matrix of the particles contains an emulsifier.

5. Aroma particles according to Claim 4, **characterised in that** the matrix contains monoglycerides in an amount of 0.5 to 3 wt.%.

6. Aroma particles according to one of Claims 1 to 5, **characterised in that** they have a glass transition temperature in the range 30 to 100°C.

7. Process for the preparation of the aroma particles according to Claim 1, **characterised by** the steps extrusion of an aromatised melt followed by die-face pelletisation, discharge of the melt from the extruder though an opening, and comminution of the melt in the still unsolidified state.

8. Use of the aroma particles according to Claim 1 in foods, pharmaceuticals and consumer products such as cosmetics, washing agents or household products.

**Revendications**

1. Particules aromatiques préparées par extrusion d'une fusion aromatisée suivie d'une granulation en tête, **caractérisées en ce que** la matrice des particules contient de 20 à 80% en poids de polymères d'hydrates de carbone ayant une masse moléculaire moyenne supérieure à 1000 et du glucose en une quantité de 0,5 à 5% en poids.

2. Particules aromatiques selon la revendication 1, **caractérisées en ce que** la matrice des particules contient de 30 à 70% en poids de polymères d'hydrates de carbone ayant une masse moléculaire moyenne supérieure à 1000.

3. Particules aromatiques selon la revendication 1, **caractérisées en ce que** la matrice des particules contient de 40 à 60% en poids de polymères d'hydrates de carbone ayant une masse moléculaire moyenne supérieure à 1000.

4. Particules aromatiques selon l'une des revendications 1 à 3, **caractérisées en ce que** la matrice des particules contient un agent émulsifiant.

5. Particules aromatiques selon la revendication 4, **caractérisées en ce que** la matrice contient des monoglycérides en une quantité de 0,5 à 3% en poids.

6. Particules aromatiques selon l'une des revendications 1 à 5, **caractérisées en ce qu'**elles ont une température de transition vitreuse dans la plage de 30 à 100°C.

7. Procédé de production des particules aromatiques selon la revendication 1, **caractérisé par** les étapes d'extrusion d'une fusion aromatisée suivie d'une granulation en tête, de sortie de la fusion par un orifice de l'extrudeuse et de broyage de la fusion à l'état non encore solidifié.

8. Utilisation des particules aromatiques selon la revendication 1 dans des produits alimentaires, des produits pharmaceutiques et des objets manufacturés tels que des cosmétiques, des lessives ou des produits de ménage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4707367 A
- US 4499112 A
- US 5603971 A
- WO 9406308 A
- US 5009900 A
- US 4820534 A
- US 5972395 A
- WO 0025606 A

**In der Beschreibung aufgeführte Nicht-Patentliteratur**

- Water as a plasticizer: Physico-chemical aspects of low moisture polymeric systems. **H. LEVINE ; L. SLADE.** In Water Science Reviews. Cambridge University Press, Cambridge, 1988, vol. 3, 79-185
- Perfume and Flavor Materials. **S. ARCTANDER.** Perfume and Flavor Materials. Selbstverlag, 1969, vol. I und II
- **K. BAUER ; D. GARBE ; H. SURBURG.** Common Fragrance and Flavor Materials. Wiley-VCH, 1997